# EUROPÄISCHE PATENTSCHRIFT

(11) **EP 2 895 334 B1**
(45) Veröffentlichungstag und Bekanntmachung des Hinweises auf die Patenterteilung: **06.07.2016**
(21) Anmeldenummer: 13759705.0
(22) Anmeldetag: 04.09.2013
(51) Int. Cl.: B60B 35/02, B60G 7/00, B60G 9/00, B60G 21/05

(54) **ACHSLENKER-KNOTENEINHEIT**
AXLE LINK COUPLING UNIT
UNITÉ D'ARTICULATION DE GUIDE D'ESSIEU

(30) Priorität: 13.09.2012 DE 102012216246
(43) Veröffentlichungstag der Anmeldung: 22.07.2015
(73) Patentinhaber: SAF-HOLLAND GmbH, 63856 Bessenbach (DE)
(72) Erfinder: DREWES, Olaf, 63743 Aschaffenburg (DE); BIEWER, Frederik, 63808 Haibach (DE)
(74) Vertreter: Müller Schupfner & Partner Patent- und Rechtsanwaltspartnerschaft mbB
(86) Internationale Anmeldenummer: PCT/EP2013/068225
(87) Internationale Veröffentlichungsnummer: WO 2014/040884

(56) Entgegenhaltungen:
- EP-A1- 1 671 821
- EP-A2- 1 842 700
- WO-A1-2007/098927
- WO-A1-2009/053491
- WO-A2-2004/054825
- DE-A1-102006 015 671
- DE-A1-102009 019 320
- DE-U1- 20 309 455

## Beschreibung

Die vorliegende Erfindung betrifft eine Achslenker-Knoteneinheit zum Einsatz im Fahrwerkssystem eines Nutzfahrzeuges.

Achslenkersysteme von Nutzfahrzeugen sind aus dem Stand der Technik hinreichend bekannt. Dabei wird bei den bisher bekannten Ausführungsformen der Achslenker bzw. Längslenker eines Nutzfahrzeuges über eine Klemmverbindung an dem Achskörper des Nutzfahrzeuges festgelegt, wobei diese Verbindung in den meisten Fällen mit einer, mittels thermischen Schweißens erzeugten Schweißverbindung verstärkt wird. Insbesondere soll durch diese doppelt abgesicherte Verbindung die Achse mit dem Achslenker drehfest verbunden sein. Es hat sich gezeigt, dass durch den beim thermischen Schweißen erzeugten lokalen Wärmeeintrag Temperaturspannungen entstehen und Gefügeschwächungen in der Achse und dem Längslenker verursachen können. In der Folge ist die Verbindungsstelle zwischen Achskörper und Achslenker eine der Hauptursachen für eine Lebensdauersenkung des gesamten Achssystems. Des Weiteren ist die geometrische Auslegung des Längslenkers bzw. Achslenkers sehr aufwändig und ein vielseitiger Einsatz der einzelnen Achslenkerkomponenten an verschiedenen Fahrwerken verschiedener Nutzfahrzeuge ist in den meisten Fällen unmöglich.

Die DE 10 2006 015 671 A1 beschreibt eine Achslenker-Knoteneinheit zum Einsatz in Nutzfahrzeugen, umfassend einen Basisabschnitt und einen ersten Befestigungsabschnitt, wobei der Basisabschnitt zumindest bereichsweise hohlkörperförmig ausgebildet ist und entlang einer ersten Befestigungsachse in den ersten Befestigungsabschnitt übergeht, wobei der erste Befestigungsabschnitt ausgelegt ist, ein Stützelement unlösbar an der Achslenker-Knoteneinheit festzulegen, und wobei ein zweiter Befestigungsabschnitt koaxial zum ersten Befestigungsabschnitt und diesem gegenüberliegend angeordnet ist.

Die EP 1 842 700 A2 beschreibt eine als Hohlköper ausgebildete Achse mit drei Befestigungsabschnitten auf jedem Ende der Achse für die unlösbare Befestigung eines Längslenkers, eines Tragarmes und eines Achsschenkels, wobei die ersten zwei gegenüberliegenden Befestigungsabschnitte koaxial und längs einer ersten Befestigungsachse angeordnet sind, und wobei der dritte Befestigungsabschnitt längs einer zweiten Befestigungsachse angeordnet ist.

Die EP 1 671 821 A1 beschreibt eine zweiteilig ausgebildete AchslenkerKnoteneinheit mit drei Befestigungsabschnitten zum Einsatz in Nutzfahrzeugen, wobei jeder Teil der Achslenker-Knoteneinheit unlösbar durch den entsprechenden Befestigungsabschnitt an der Achse festgelegt ist, und wobei die AchslenkerKnoteneinheit durch einen dritten Befestigungsabschnitt unlösbar an dem Achslenker festgelegt ist.

Aufgabe der vorliegenden Erfindung ist es, eine Achslenker-Knoteneinheit bereitzustellen, welche eine Anpassung des Achslenkersystems an verschiedene Nutzfahrzeuge vereinfacht und gleichzeitig die Lebensdauer des Achslenkersystems erhöht.

Diese Aufgabe wird gelöst mit einer Achslenker-Knoteneinheit gemäß dem unabhängigen Anspruch 1. Weitere Vorteile und Merkmale der vorliegenden Erfindung ergeben sich aus den abhängigen Ansprüchen.

Erfindungsgemäß umfasst die Achslenker-Knoteneinheit einen Basisabschnitt und einen Befestigungsabschnitt, wobei der Basisabschnitt zumindest bereichsweise hohlkörperförmig ausgebildet ist und entlang einer Befestigungsachse in den Befestigungsabschnitt übergeht, wobei der Befestigungsabschnitt ausgelegt ist, ein als Achselement bzw. Lenkerelement ausgebildetes Stützelement unlösbar an der Achslenker-Knoteneinheit festzulegen. Bevorzugt weist die Achslenker-Knoteneinheit einen zweiten Befestigungsabschnitt auf und besonders bevorzugt eine Vielzahl von Befestigungsabschnitten. Der Basisabschnitt ist besonders bevorzugt dafür ausgelegt, Kräfte und Momente vom Befestigungsabschnitt, bevorzugt unter Vermeidung von lokalen Spannungsspitzen, aufzunehmen. Bevorzugt wird das am Befestigungsabschnitt festzulegende Stützelement durch den Basisabschnitt in Position gehalten, d.h. Kräfte können von der Achslenker-Knoteneinheit auf das Stützelement übertragen werden oder von diesem aufgenommen werden. Zur Erhöhung des Flächenträgheitsmoments des Basisabschnittes, ohne dabei das Gewicht der Achslenker-Knoteneinheit signifikant erhöhen zu müssen, ist dieser erfindungsgemäß zumindest bereichsweise hohlkörperförmig ausgelegt, wobei insbesondere seine Fähigkeit, die Momente aufzunehmen und diese bei möglichst geringen Materialspannungen weiterzuleiten, besonders groß ist. Bevorzugt weist der Basisabschnitt als Teil des Fahrwerks eines Nutzfahrzeuges ein möglichst geringes Gewicht auf, wobei möglichst dünne Wandstärken bzw. Leichtbaumaterial bevorzugt sein können. Um einen Kompromiss zwischen einer hohen Übertragbarkeit von Biegemomenten und Kräften und gleichzeitig einem geringen Gewicht zu erreichen, wird das Flächenträgheitsmoment des Basisabschnitts besonders dadurch gesteigert, dass in verschiedenen Schnittebenen des Basisabschnitts geschlossene, hohlkörperförmige bzw. bevorzugt ring- oder ellipsenförmige Querschnitte ausgebildet sind. Insbesondere bevorzugt ist es, dass die Achslenker-Knoteneinheit in einem ersten Zustand besonders für einfache Fertigung bzw. Herstellung der Verbindung zwischen dem Befestigungsabschnitt und dem Stützelement ausgelegt ist und in einem zweiten Zustand insbesondere auf optimale Kraft- bzw. Momentübertragung zwischen dem Befestigungsabschnitt und dem Basisabschnitt ausgelegt ist. Im ersten Zustand weist die Achslenker-Knoteneinheit entsprechend bevorzugt kreisförmige oder einfache quadratische oder rechteckige Querschnittsprofile auf, welche eine möglichst einfache Herstellung weiterer festzulegender Komponenten an der Achslenker-Knoteneinheit und auch die Herstellung der Achslenker-Knoteneinheit selbst vereinfachen. Im zweiten Zustand weist die Achslenker-Knoteneinheit ein auf Kraft- bzw. Biegemomentübertragung insbesondere entlang ausgewählter Achsen und Richtungen, optimiertes Querschnittsprofil auf, welches besonders bevorzugt von der Kreis- bzw. Rechtecksform abweicht. Besonders bevorzugt ist die Achslenker-Knoteneinheit, insbesondere der Befestigungsabschnitt, ausgelegt ein Stützelement mittels einer Klebverbindung aufzunehmen und festzulegen. Vorzugsweise ist die mit der Kontaktfläche des Stützelements korrespondierende Fläche des Befestigungsabschnitts mit einer Oberflächengüte ausgestattet, die besonders hohe Adhäsions- und Kohäsionswerte bei der Herstellung einer Klebverbindung erlaubt. Weiterhin bevorzugt können für eine Vielzahl von an der AchslenkerKnoteneinheit festzulegende Stützelemente verschiedene, vorzugsweise stoffschlüssige, Verbindungsmethoden zum Einsatz gelangen. Dabei ist es besonders bevorzugt, ein Stützelement, welches größere Kräfte überträgt, mittels Reibschweißen festzulegen, während ein Stützelement, das nur geringe Kräfte überträgt mit einer Klebverbindung festzulegen. Auf diese Weise kann der Fertigungsaufwand so gering wie möglich gehalten werden, da die gewählte Befestigungsmethode optimal an die zu übertragenden Kräfte anpassbar ist.

Bevorzugt weist der Befestigungsabschnitt eine nach außen gewandte Anschlagfläche auf, welche bevorzugt zur Anlage des Stützelements dient. Als nach außen gewandt ist in diesem Zusammenhang die vom Basisabschnitt abgewandte Seite des Befestigungsabschnitts definiert. Die nach außen gewandte Anschlagsfläche des Befestigungsabschnitts kann insbesondere bevorzugt als Kontaktfläche des Befestigungsabschnitts mit einem Stützelement zur Ausführung einer Reibschweißverbindung dienen. Darüber hinaus bevorzugt kann die nach außen gewandte Anschlagsfläche des Stützelements auch formschlüssig gegen Verlagerung relativ zur Achslenker-Knoteneinheit bzw. relativ zum Befestigungsabschnitt der Achslenker-Knoteneinheit hin zum Basisabschnitt bzw. in Richtung des Basisabschnitts sichern. Es versteht sich, dass das Stützelement, welches am Befestigungsabschnitt festgelegt werden soll, vorzugsweise eine, zur Anschlagfläche des Befestigungsabschnitts korrespondierende stützelementseitige Anschlagsfläche aufweist. Die Anschlagsfläche des Befestigungsabschnitts ist vorzugsweise eben ausgebildet, d. h. vorzugsweise die Stirnfläche eines Ringzylinders bzw. eines Rohres, eine Mantelabschnittsfläche eines Scheibensegments eines Zylinders sein oder beispielsweise ein gerundeter Oberflächenausschnitt eines Kugelelements. Vorzugsweise ist die Anschlagsfläche des Befestigungsabschnitts dabei eben entlang einer, in einer Ebene, welche quer zur Befestigungsachse angeordnet ist, verlaufenden Richtung. Das heißt mit anderen Worten weist ein Schnitt durch die Anschlagsfläche des Befestigungsabschnitts in einer quer zur Befestigungsachse liegenden Ebene einen durchgehenden bzw. linearen Schnittkantenverlauf des Schnittbildes in dieser Ebene auf.

Alternativ bevorzugt kann es sein, dass der Befestigungsabschnitt eine Vielzahl von nach außen gewandten Anschlagsflächen aufweist, wobei diese insbesondere bevorzugt entlang der Befestigungsachse versetzt zueinander angeordnet sein können. Auf diese Weise kann vorzugsweise eine Vielzahl von entlang der Befestigungsachse versetzt zueinander angeordneten Reibschweißflächen zwischen Befestigungsabschnitt und Stützelement ausgebildet werden, mittels welcher der Verbund aus Achslenker-Knoteneinheit und Stützelement höhere Momente übertragen kann, da ein Hebelarm zwischen den beiden Befestigungsabschnitten, die in den jeweiligen Kontaktflächen auftretenden Momente und Spannungen reduziert.

In einer besonders bevorzugten Ausführungsform ist in einem ersten Zustand der Achslenker-Knoteneinheit die nach außen gewandte Anschlagsfläche rotationssymmetrisch um die Befestigungsachse ausgebildet. Die rotationssymmetrische Ausbildung der nach außen gewandten Anschlagsfläche ist mit Vorteil dafür geeignet und ausgelegt, als Kontaktfläche für ein Reibschweißverfahren insbesondere bevorzugt Rotationsreibschweißen, zu dienen. Die nach außen gewandte Anschlagsfläche kann dabei quer zur Befestigungsachse einen in Richtung der Befestigungsachse variierenden Querschnittsverslauf aufweisen, wobei jedoch bevorzugt die Rotationssymmetrie der nach außen gewandten Anschlagsfläche erhalten bleibt. Es kann auf diese Weise die für eine bestimmte Ringfläche vorgesehene, tatsächliche Kontaktfläche für ein Reibschweißverfahren, beispielsweise durch Vorsprünge und Rücksprünge, Rillen oder durch Rundungen vergrößert werden oder an bestimmte Flächengeometrien eines an der ersten Anschlagsfläche anzulagernden Stützelements angepasst werden. Bevorzugt wird die nach außen gewandte Anschlagsfläche gemeinsam mit der Achslenker-Knoteneinheit und deren Befestigungsabschnitten im zweiten Zustand hin zu einer Geometrie, welche nicht zwangsläufig rotationssymmetrisch sein muss, verformt.

Weiterhin bevorzugt weist der Befestigungsabschnitt eine nach innen gewandte Anschlagsfläche auf, welche in einem zweiten Zustand des Stützelements zur Einlage des Stützelements dient. Die nach innen gewandte, d.h. die zum Basisabschnitt der Achslenker-Knoteneinheit hingewandte Anschlagsfläche dient, ähnlich der nach außen gewandten Anschlagsfläche, der Anlage einer entsprechenden Korrespondenzgeometrie des Stützelements. Dabei ist es bevorzugt, dass die nach innen gewandte Anschlagsfläche ausgelegt ist, mit der entsprechenden korrespondierenden Geometrie des Stützelements eine Hinterschneidung zu bilden, welche das Stützelement gegen Verlagerung relativ zur Achslenker-Knoteneinheit in der vom Basisabschnitt wegweisenden Richtung sichert. In diesem Zusammenhang wird ein erster Zustand des Stützelements bevorzugt derart definiert, dass in diesem Zustand das Stützelement in den Befestigungsabschnitt der AchslenkerKnoteneinheit eingeführt werden kann, um anschließend derart verformt zu werden, dass das Stützelement eine entsprechende Korrespondenzgeometrie zur nach innen gewandten Anschlagsfläche der Achslenker-Knoteneinheit bzw. des Befestigungsabschnitts aufweist, welche das Stützelement formschlüssig gegen Verlagerung relativ zur Achslenker-Knoteneinheit in der vom Basisabschnitt der Achslenker-Knoteneinheit wegweisenden Richtung sichert.

Bevorzugt weist der Befestigungsabschnitt einen, vorzugsweise eine Vielzahl von Vorsprüngen und/oder Rücksprüngen quer zur Befestigungsachse auf, um das Stützelement formschlüssig an der Achslenker-Knoteneinheit festzulegen. Der Vor- bzw. Rücksprung des Befestigungsabschnitts erstreckt sich dabei zumindest quer zur Befestigungsachse und kann besonders bevorzugt als einzelner in den Befestigungsabschnitt hinein bzw. aus dem Befestigungsabschnitt hinausragender Vorsprung oder als umlaufender Vor- bzw. Rücksprung ausgebildet sein. Vorteilhafterweise ist das Stützelement derart ausgelegt, dass es in einem ersten Zustand an dem Vor- bzw. Rücksprung vorbei in den Befestigungsabschnitt einführbar bzw. auf den Befestigungsabschnitt aufsteckbar ist und in einem zweiten Zustand derart verformt ist, dass eine entsprechende korrespondierende Geometrie des Stützelements mit dem bevorzugt vorgesehenen Vorsprung und/oder Rücksprung eine Hinterschneidung bildet und auf diese Weise das Stützelement formschlüssig am Befestigungsabschnitt der Achslenker-Knoteneinheit festlegt. Als Umformverfahren, um das Stützelement vom ersten in den zweiten Zustand zu bringen, bietet sich in diesem Zusammenhang ein Innenhochdruckumformverfahren an. Mit Vorteil weist der Vor- bzw. Rücksprung des Befestigungsabschnitts gerundete Kanten bzw. Flächen bzw. Oberflächen auf, um bei einer Verformung des Materials des Stützelements an dem Vor- bzw. Rücksprung Kerbwirkungen zu vermeiden.

Ferner bevorzugt ist die Achslenker-Knoteneinheit aus zwei Halbschalen ausgebildet. Bevorzugt zur Vereinfachung der Herstellung der Achslenker-Knoteneinheit kann diese aus zwei Halbschalen, welche beispielsweise als Halbzeuge ausgebildet sind, hergestellt sein. Die Halbschalen ihrerseits können bevorzugt durch ein Umformverfahren, wie beispielsweise Tiefziehen oder Gesenkschmieden, hergestellt sein und anschließend miteinander verschweißt sein. Es ist auf diese Weise möglich, insbesondere im Vergleich zum Herstellen durch ein Gießverfahren, die Herstellungskosten für die Achslenker-Knoteneinheit zu senken und die Herstellungsgeschwindigkeit zu steigern. Um die Halbschalen zur Achslenker-Knoteneinheit zusammenzufügen, kann bevorzugt ein Schweißverfahren wie Schwingungsreibschweißen, bei welchem die Teile in oszillierenden Bewegungen zueinander gehalten werden und gleichzeitig gegeneinander gepresst werden oder ein thermisches Schweißverfahren wie Lichtbogenschweißen oder Gasschmelzschweißen zum Einsatz kommen.

Vorzugsweise weist die Achslenker-Knoteneinheit in einem ersten Zustand einen ersten Stützabschnitt auf, wobei der erste Stützabschnitt im ersten und/oder im zweiten Zustand der Achslenker-Knoteneinheit bevorzugt als Befestigungsbereich für eine Luftfeder eines Nutzfahrzeuges ausgebildet ist. Mit anderen Worten ist der Befestigungsbereich für eine Luftfeder eines Nutzfahrzeuges bereits integral, beispielsweise während eines Gießvorgangs, mit der Achslenker-Knoteneinheit ausgeführt und muss nicht über ein Schweißverfahren oder ein ähnliches Verfahren an der Achslenker-Knoteneinheit festgelegt werden. Insbesondere für Anwendungen, bei denen eine Achslenker-Knoteneinheit mit einer bestimmten geometrischen Auslegung für eine Reihe von Nutzfahrzeugen, welche das gleiche Luftfedersystem verwenden, eingesetzt werden soll, kann es sich anbieten, den Luftfederhalter bzw. den Befestigungsbereich für die Luftfeder eines Nutzfahrzeuges bereits integral an der Achslenker-Knoteneinheit anzuordnen. Dabei kann der erste Stützabschnitt bzw. der Befestigungsbereich für die Luftfeder in einem ersten Zustand der Achslenker-Knoteneinheit als einfache Geometrie ausgelegt werden, beispielsweise als Rohr und in einem zweiten Zustand an die entsprechende Belastung und die entsprechenden Anschlussgeometrien der Luftfeder angepasst umgeformt sein. Besonders bevorzugt ist der erste Stützabschnitt im zweiten Zustand abgeflacht und mit einem großen Auflagebereich bzw. Haltebereich für ein aus dem Stand der Technik bekanntes Luftfederelement ausgebildet.

Alternativ oder zusätzlich zu einem ersten Stützabschnitt können bevorzugt weitere Elemente wie beispielsweise ein Achsstummelabschnitt oder ein zweiter Stützabschnitt an der Achslenker-Knoteneinheit integral vorgesehen sein. Der Achsstummelabschnitt ist dabei bevorzugt koaxial bzw. rotationssymmetrisch bzw. parallel zur Haupterstreckungsachse der Achse des Nutzfahrzeuges, an welchem wiederum die Achslenker-Knoteneinheit festlegbar ist, ausgebildet. Mit anderen Worten ist es bevorzugt, dass sich der Achsstummelabschnitt entlang der ersten Befestigungsachse oder einer parallel zur ersten Befestigungsachse verlaufenden Richtung erstreckt. Der zweite Stützabschnitt dient bevorzugt der Festlegung weiterer Fahrwerkselemente an der Achslenker-Knoteneinheit. Beispielsweise ist ein Stoß- bzw. Schwingungsdämpfer des Fahrwerkssystems des Nutzfahrzeuges direkt über den zweiten Stützabschnitt an der Achslenker-Knoteneinheit festlegbar sein. Weiterhin bevorzugt ist ein Bremsträger über den zweiten Stützabschnitt an der Achslenker-Knoteneinheit festlegbar sein. Mittels der Anordnung eines oder einer Vielzahl zweiter Stützabschnitte an der Achslenker-Knoteneinheit lässt sich die Kompaktheit des Fahrwerkssystems erhöhen und Gewicht und Bauraum im selben Zuge reduzieren.

In einer besonders bevorzugten Ausführungsform ist ein zweiter Befestigungsabschnitt koaxial zum ersten Befestigungsabschnitt und diesem gegenüber liegend angeordnet, wobei sich beide Befestigungsabschnitte vorzugsweise entlang einer ersten Befestigungsachse erstrecken. Dabei sind der erste und der zweite Befestigungsabschnitt bevorzugt ausgelegt, ein Achsrohr und einen Achsstummel eines Nutzfahrzeuges festzulegen. Weiterhin bevorzugt ist ein dritter Befestigungsabschnitt, der sich im Wesentlichen längs einer zweiten Befestigungsachse erstreckt und ein vierter Befestigungsabschnitt, welcher sich im Wesentlichen längs einer dritten Befestigungsachse erstreckt, vorgesehen, wobei die erste Befestigungsachse bevorzugt senkrecht zu der zweiten und der dritten Befestigungsachse steht, wobei der dritte und der vierte Befestigungsabschnitt vorzugsweise ausgelegt sind, Elemente eines Längslenkers bzw. eines Achslenkers festzulegen. In dieser bevorzugten Ausführungsform weist die Achslenker-Knoteneinheit mit anderen Worten zumindest zwei, vorzugsweise vier Befestigungsabschnitte auf, von denen bevorzugt zwei der Festlegung der starren Achse oder der Lenkachse einer Achslenker-Knoteneinheit bzw. dem Achsstummel an der AchslenkerKnoteneinheit dienen und zwei weitere der Befestigung von Elementen eines Längs- bzw. Achslenkers des Nutzfahrzeuges dienen. Die erste, die zweite und die dritte Befestigungsachse sind dabei bevorzugt die Achsen, entlang derer die jeweiligen Stützelemente an den jeweiligen Befestigungsabschnitten festgelegt werden. Für eine bevorzugte rotationssymmetrische Ausbildung der Befestigungsabschnitte sind diese also insbesondere bevorzugt rotationssymmetrisch um die jeweilige Befestigungsachse ausgebildet. Die verschiedenen Befestigungsachsen können dabei je nach Geometrie der Achslenker-Knoteneinheit zueinander versetzt angeordnet sein und müssen nicht zwangsläufig einen Schnittpunkt miteinander haben. Vorteilhaft ist diese Ausführung einer Achslenker-Knoteneinheit mit zumindest zwei Befestigungsabschnitten, da mit geringem Fertigungsaufwand eine Lenkereinheit für ein Nutzfahrzeug hergestellt werden kann, welche aus modular ausgebildeten Einzelteilen besteht.

Bevorzugt ist es, dass die zweite Befestigungsachse und die dritte Befestigungsachse vorzugsweise in einer Ebene senkrecht zur ersten Befestigungsachse einen Winkel einschließen, welcher zwischen 90° und 270°, bevorzugt zwischen 135° und 225° und besonders bevorzugt bei ca. 160° bis 220° liegt. Die zweite und die dritte Befestigungsachse sind bevorzugt jeweils die beiden Richtungen, entlang derer die Elemente eines Lenkerelements an der Achslenker-Knoteneinheit festgelegt werden, und es hat sich gezeigt, dass der Bauraum des Fahrwerkssystems besser ausgenutzt werden kann, wenn die zweite und die dritte Befestigungsachse einen Winkel einschließen, welcher bevorzugt zwischen 90° und 270° liegt. Für den Fall, dass die zweite und die dritte Befestigungsachse keinen Schnittpunkt miteinander haben, also entlang einer quer zu beiden Achsen liegenden Achse versetzt zueinander verlaufen, so wird der Winkel insbesondere bevorzugt zwischen den Projektionen der zweiten und dritten Befestigungsachse auf einer senkrecht zu einer Achse stehenden Ebene, welche ihrerseits wiederum senkrecht zur der zweiten und der dritten Befestigungsachse steht, gemessen. Der Bevorzugte Winkelbereich ermöglicht es mit Vorteil niedrige Fahrhöhen, d. h. einen möglichst geringen Abstand von Boden zum Rahmen des Nutzfahrzeuges, mit einer erfindungsgemäßen Achslenker-Knoteneinheit zu erreichen.

Weiterhin bevorzugt weist der dritte Befestigungsabschnitt eine Erstreckung quer zur zweiten Befestigungsachse auf, die zur Erstreckung des ersten Befestigungsabschnittes quer zur ersten Befestigungsachse in einem Verhältnis von 0,7 bis 1,5, bevorzugt von 0,9 bis 1,4 und besonders bevorzugt von ca. 1,1 bis 1,3 liegt. Je größer die Erstreckung des jeweiligen Befestigungsabschnitts quer zu der ihn durchlaufenden Befestigungsachse ist, desto größer ist bei gleich bleibenden Wandstärken des Befestigungsabschnitts das Flächenträgheitsmoment. Bevorzugt ist es, dass der erste Befestigungsabschnitt, welcher bevorzugt zur Anlage der starren Achse bzw. der Lenkachse des Nutzfahrzeuges hingewandt ist, eine Erstreckung aufweist, die kleiner ist als die Erstreckung des dritten Befestigungsabschnittes quer zur zweiten Befestigungsachse. Am dritten Befestigungsabschnitt ist bevorzugt ein Element eines Längslenkers festgelegt, beispielsweise eine Stützvorrichtung einer Luftfeder oder eine Hebelvorrichtung zur schwenkbaren Lagerung des Lenkerelements am Lagerbock eines Nutzfahrzeug-Fahrwerkes.

Weiterhin bevorzugt kann es sein, dass der zweite Befestigungsabschnitt eine Erstreckung quer zur ersten Befestigungsachse aufweist, die zur Erstreckung des ersten Befestigungsabschnitts quer zur ersten Befestigungsachse in einem Verhältnis von 0,7 bis 1,5, bevorzugt 0,9 bis 1,4 und besonders bevorzugt von ca. 1,1 bis 1,3 liegt. Am zweiten Befestigungsabschnitt wird insbesondere bevorzugt der Achsstummel einer Nutzfahrzeugradaufhängung festgelegt, wobei die Verbindung des Achsstummels mit der Achslenker-Knoteneinheit eine höhere Festigkeit aufweisen muss als die Verbindung des Achskörpers am ersten Befestigungsabschnitt mit der Achslenker-Knoteneinheit. Aufgrund dessen ist es bevorzugt, dass die Erstreckung des zweiten Befestigungsabschnitts größer ist als die Erstreckung des ersten Befestigungsabschnitts quer zur ersten Befestigungsachse. Es wird auf diese Weise das Flächenträgheitsmoment des Befestigungsabschnitts des Achsstummels mit der Achslenker-Knoteneinheit größer gestaltet als das Flächenträgheitsmoment des Befestigungsabschnitts der Achslenker-Knoteneinheit mit dem Achskörper bzw. der Lenkachse des Nutzfahrzeuges.

In einer besonders bevorzugten Ausführungsform weist der Befestigungsabschnitt und der Basisabschnitt einen im zweiten Zustand der Achslenker-Knoteneinheit von einer Kreisform abweichenden Querschnitt auf. Im zweiten Zustand ist die Achslenker-Knoteneinheit bevorzugt auf optimale Kraft- und Momentübertragung zwischen den einzelnen, an ihr festgelegten, Fahrwerkselementen des Nutzfahrzeuges ausgelegt. Entsprechend ist es bevorzugt, dass auch die geometrische Gestaltung der verschiedenen Befestigungsabschnitte an die jeweils vorherrschenden Hauptkraftrichtungen bzw. Hauptmomentrichtungen angepasst ist. Daher sind bevorzugt polygonale bzw. mit Rundungen versehene Querschnitte oder elliptische bzw. parabolische Querschnitte der Befestigungsabschnitte der Achslenker-Knoteneinheit mit den jeweiligen Stützelementen bevorzugt.

Weitere Vorteile und Merkmale der Erfindung ergeben sich aus der nachfolgenden Beschreibung mit Bezug auf die beigefügten Figuren. Einzelne Merkmale der in den Figuren gezeigten Ausführungsformen können dabei im Rahmen der Erfindung miteinander kombiniert werden.

Es zeigen:
- Fig. 1a-c: drei Ansichten einer bevorzugten Ausführungsform der erfindungsgemäßen Achslenker-Knoteneinheit,
- Fig. 2: Eine Schnittansicht einer bevorzugten Ausführungsform der erfindungsgemäßen Achslenker-Knoteneinheit,
- Fig. 3: eine Seitenansicht einer Ausführungsform einer AchslenkerKnoteneinheit mit integral ausgebildetem Stützabschnitt,
- Fig. 4a, b: zwei Ansichten einer bevorzugten Ausführungsform der erfindungsgemäßen Achslenker-Knoteneinheit im zweiten Zustand,
- Fig. 5: eine Schnittansicht einer bevorzugten Ausführungsform der erfindungsgemäßen Achslenker-Knoteneinheit,
- Fig. 6: eine perspektivische Ansicht zweier zur Bildung einer AchslenkerKnoteneinheit geeigneten Halbschalen,
- Fig. 7: eine Ansicht einer Ausführungsform einer Achslenker-Knoteneinheit, und
- Fig. 8: eine Ansicht einer Ausführungsform einer Achslenker-Knoteneinheit.

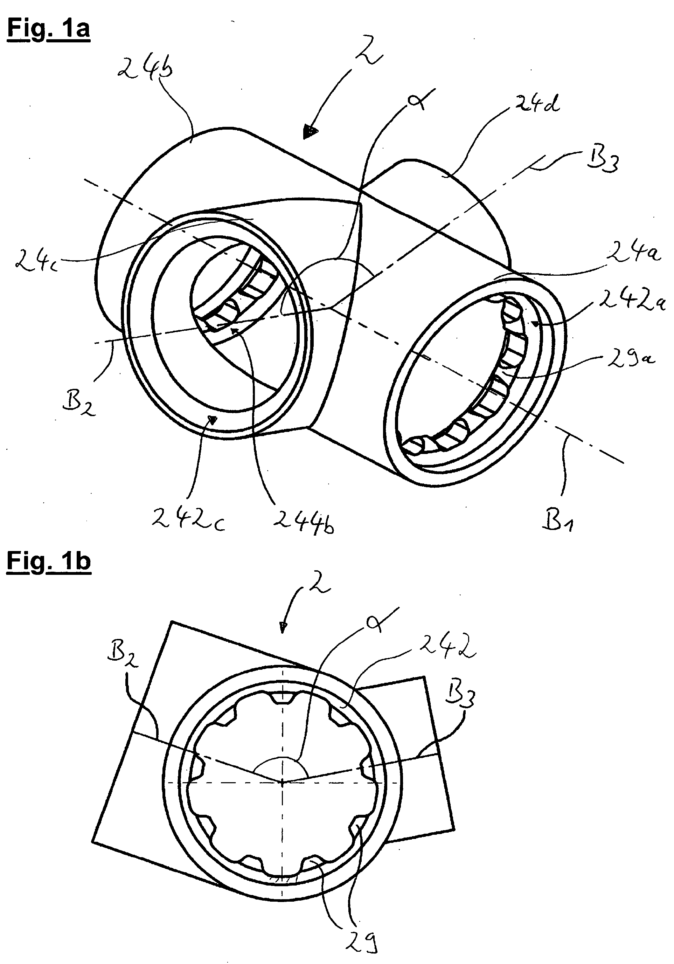

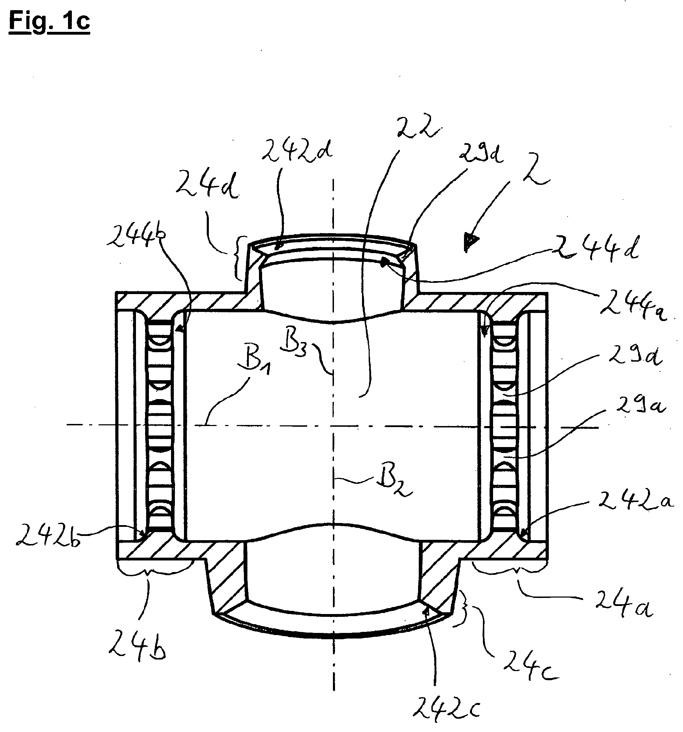

In Fig. 1a, 1b und 1c sind verschiedene Ansichten einer ersten bevorzugten Ausführungsform der erfindungsgemäßen Achslenker-Knoteneinheit 2 gezeigt. Der perspektivischen Ansicht in Fig. 1a ist zu entnehmen, dass die Achslenker-Knoteneinheit zwei, bevorzugt vier, Befestigungsabschnitte 24a, 24b, 24c und 24d aufweist. Im Folgenden sollen jeweils einzelnen Befestigungsabschnitten zugeordnete Geometrien wie beispielsweise die Anschlagsfläche 242 mit jeweils dem entsprechenden Buchstaben a, b, c, ... einem der entsprechenden Befestigungsabschnitte 24 (a-d, ...) zugeordnet werden. Der erste Befestigungsabschnitt 24a und der zweite Befestigungsabschnitt 24b sind bevorzugt rotationssymmetrisch bzw. im Wesentlichen rotationssymmetrisch um die erste Befestigungsachse B₁ ausgebildet. Der dritte Befestigungsabschnitt 24c ist im Wesentlichen rotationssymmetrisch um die zweite Befestigungsachse B₂ ausgebildet und der vierte Befestigungsabschnitt 24d ist bevorzugt rotationssymmetrisch um die dritte Befestigungsachse B₃ ausgebildet. Wie in Fig. 1a dargestellt, können an den jeweiligen Befestigungsabschnitten 24 (a-d) Vorsprünge 29 (a-d) vorgesehen sein, wobei diese nicht zwangsläufig durchgehend, das heißt ringförmig, um die jeweilige Befestigungsachse B ausgebildet sein müssen, sondern, wie in der Figur dargestellt als beispielsweise Zähne bzw. Nasen ausgebildet sein können. Es kann auf diese Weise erreicht werden, dass durch eine formschlüssige Festlegung eines an der Achslenker-Knoteneinheit festzulegenden Stützelements sowohl eine Verdrehung um die jeweilige Befestigungsachse B als auch eine Verlagerung längs der jeweiligen Befestigungsachse B relativ zum Befestigungsabschnitt 24 (a-d) erreicht werden. Die Befestigungsabschnitte 24 weisen jeweils eine nach außen gewandte Anschlagfläche 242 (a-d) auf, wobei in der dargestellten perspektivischen Ansicht die zweite und die vierte Anschlagsfläche 242b und 242d verdeckt sind. Bevorzugt ist weiterhin eine Vielzahl von einzelnen zahnartig nach innen bzw. außen ragenden Anschlagflächen 242 an dem jeweiligen Befestigungsabschnitt 24 vorgesehen. Die zweite Befestigungsachse B₂ und die dritte Befestigungsachse B₃ sind vorzugsweise nicht kollinear bzw. parallel zueinander ausgerichtet, sondern bilden in einer Ebene senkrecht zur Befestigungsachse B₁ einen Winkel α, welcher bevorzugt in einem Bereich zwischen 90° und 270° liegt und besonders bevorzugt kleiner als 180° ist. Besonders gut sichtbar ist der Winkel α dabei in der in Fig. 1 b gezeigten Seitenansicht der erfindungsgemäßen Achslenker-Knoteneinheit 2. Der in Fig. 1c gezeigten Schnittansicht der bevorzugten Ausführungsform der Achslenker-Knoteneinheit 2 kann insbesondere der bevorzugte Verlauf der Wandstärken der einzelnen Befestigungsabschnitte 24 (a-d) entnommen werden, wobei es beispielsweise besonders bevorzugt ist, dass der dritte Befestigungsabschnitt 24c eine größere Wandstärke aufweist als der vierte Befestigungsabschnitt 24d. Die Wandstärke wird hierbei insbesondere bevorzugt als Erstreckung des Materials bzw. der jeweiligen Wände der Achslenker-Knoteneinheit quer zu den Befestigungsachsen B₁ bzw. B₂ bzw. B₃ gemessen. Der Schnittansicht in Fig. 1c ist die bevorzugte Ausführungsform zu entnehmen, wonach einer der Befestigungsabschnitte 24, im ausgewählten Beispiel der Befestigungsabschnitt 24d, eine nach außen gewandte Anschlagsfläche 242d und eine nach innen gewandte Anschlagfläche 244d aufweist. Die nach innen gewandte Anschlagsfläche 244 und die nach außen gewandte Anschlagsfläche 242 dient dabei insbesondere bevorzugt der formschlüssigen Festlegung eines in den Befestigungsabschnitt 24 eingeführten und anschließend umgeformten Stützelements. Der vierte Befestigungsabschnitt 24d weist somit einen ringförmig nach innen ragenden bzw. rotationssymmetrisch um die dritte Befestigungsachse B₃ umlaufenden Vorsprung 29d auf. Am ersten Befestigungsabschnitt 24a und am zweiten Befestigungsabschnitt 24b ist eine alternativ auch für die anderen Befestigungsabschnitte 24c, 24d anwendbare Auslegung gezeigt, bei welcher zahnartig nach innen ragende Vorsprünge 29a bzw. 29b vorgesehen sind, welche insbesondere bevorzugt gerundete Geometrien aufweisen, um Kerbwirkungen an einem umgeformten Stützelement zu vermeiden. Es versteht sich, dass ein, sich jeweils quer zur entsprechenden Befestigungsachse B erstreckender Vorsprung 29 bevorzugt eine nach innen und eine nach außen weisende Anschlagsfläche 244, 242 aufweist. Bevorzugt ist es darüber hinaus, dass der erste Befestigungsabschnitt 24a und der zweite Befestigungsabschnitt 24b die gleiche Erstreckung und die gleiche Form relativ zur ersten Befestigungsachse B₁ aufweisen und jeweils koaxial zueinander und zur ersten Befestigungsachse B₁ ausgelegt sind. Es wird auf diese Weise besonders einfach ermöglicht, ein rohrförmiges Stützelement beispielsweise den Achskörper einer Fahrzeugachse mit bereits integral vorgesehenem Achsstummel, durch die Achslenker-Knoteneinheit 2 hindurchzuführen und anschließend mittels eines Innenhochdruck-Umformverfahrens aufzublähen und gegen die Innenwände des Basisabschnitts 22 und der Befestigungsabschnitte 24a und 24b zu pressen und auf diese Weise einen Formschluss zwischen der Achslenker-Knoteneinheit 2 und dem Stützelement herzustellen. Der dritte Befestigungsabschnitt 24c ist in der dargestellten Ausführungsform besonders gut dafür ausgelegt, ein Stützelement mittels eines Reibschweißverfahrens festzulegen. Die nach außen weisende Anschlagfläche 242c ist dabei bevorzugt ein Ringsegment einer Mantelfläche eines Kegels. Weiterhin bevorzugt könnten die jeweiligen nach außen ragenden Anschlagflächen 242 (a-d) auch jeweils quer zur jeweiligen Befestigungsachse B_{1...3} ausgerichtet sein.

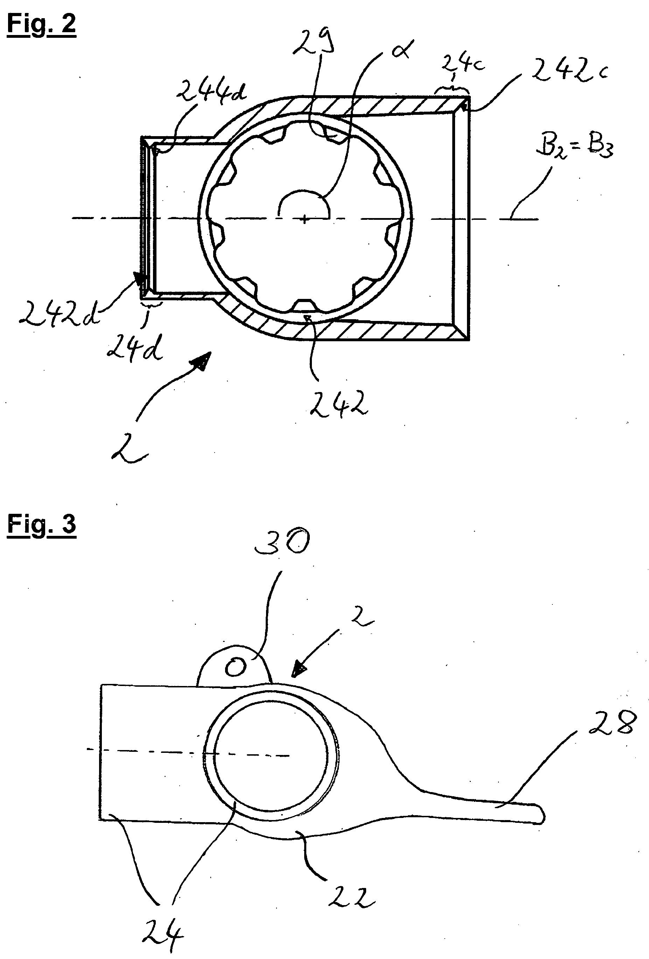

Fig. 2 zeigt eine bevorzugte Ausführungsform der erfindungsgemäßen Achslenker-Knoteneinheit 2, bei welcher die zweite Befestigungsachse B₂ kollinear bzw. parallel zur dritten Befestigungsachse B₃ ausgerichtet ist. In dieser Ausführungsform ist der zwischen den Befestigungsachsen B₂ und B₃ aufgespannte Winkel α entsprechend 180°.

Fig. 3 zeigt eine Seitenansicht einer Ausführungsform einer Achslenker-Knoteneinheit, bei welcher ein erster Stützabschnitt 28 und/oder ein zweiter Stützabschnitt 30 integral mit dem Körper bzw. mit dem Basisabschnitt 22 der Achslenker-Knoteneinheit 2 ausgeführt sind. Der erste Stützabschnitt 28 ist dabei bevorzugt als Halterungsabschnitt bzw. Stützabschnitt zur Lagerung einer Luftfeder an der Achslenker-Knoteneinheit 2 ausgelegt. Der zweite Stützabschnitt 30 kann beispielsweise wie gezeigt als Öse oder als Steg ausgebildet sein, welcher beispielsweise eine Aussparung aufweist, mittels welcher ein Stoß bzw. Schwingungsdämpfer des Fahrwerkssystems des Nutzfahrzeuges über einen Bolzen direkt an der Achslenker-Knoteneinheit 2 festlegbar ist. Weiterhin in der Figur gezeigt sind zwei weitere Befestigungsabschnitte 24, von denen einer nach in der Figur links hin ragt und einer vom Basisabschnitt 22 der Achslenker-Knoteneinheit 2 zum Betrachter hin ragt.

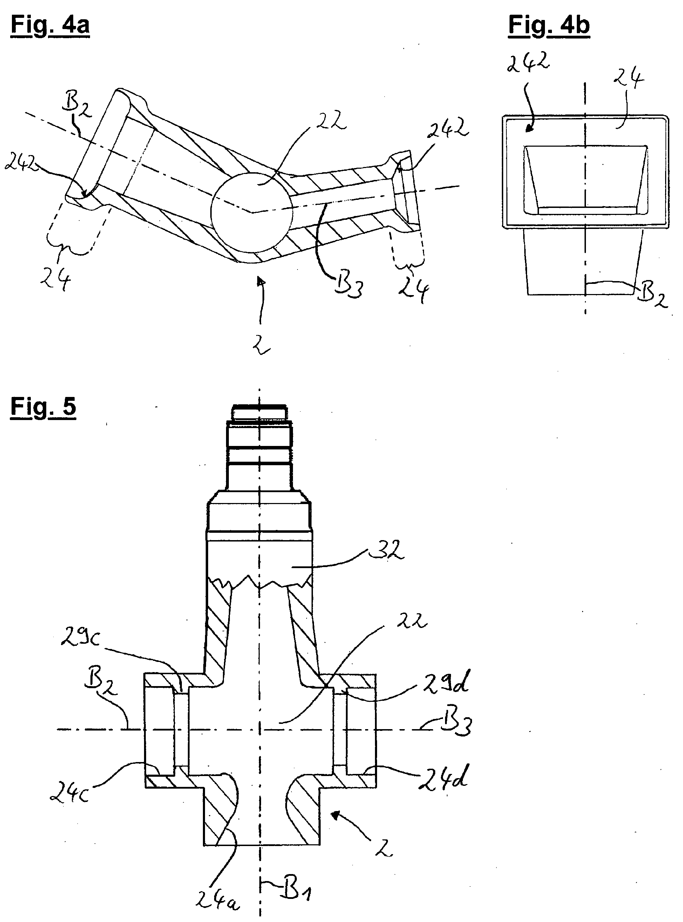

Bei der in Fig. 4a und 4b gezeigten bevorzugten Ausführungsform weisen die Befestigungsabschnitte 24, bevorzugt in ihrem zweiten Zustand, eine von der Kreisform abweichende Geometrie auf. Beispielhaft gezeigt ist eine rechteckige Form des jeweiligen Befestigungsabschnitts 24. Für den bevorzugten Fall, dass ein Stützelement mittels eines Umformverfahrens beispielsweise unterstützt durch eine Klebeverbindung bzw. eine Lötverbindung an der Achslenker-Knoteneinheit festgelegt werden soll, so kann die Achslenker-Knoteneinheit diesen rechteckigen Querschnitt bereits in ihrem ersten Zustand aufweisen. Alternativ bevorzugt kann die Achslenker-Knoteneinheit 2 in ihrem ersten Zustand bevorzugt kreisförmig ausgebildete Befestigungsabschnitte 24 aufweisen, an welchen ein Stützelement festgelegt wird und wonach anschließend Achslenker-Knoteneinheit 2 und Stützelement gemeinsam hin zu rechteckigen bzw. gerundet rechteckigen Querschnitten verformt werden. Alternativ bevorzugt ist statt des rechteckigen Querschnitts auch ein elliptisch ovaler bzw. polygonaler Querschnitt für die Befestigungsabschnitte 24 bzw. Teile des Basisabschnitts 22 der Achslenker-Knoteneinheit 2 vorgesehen sein. Weiterhin bevorzugt ist es, dass nur einzelne der Befestigungsabschnitte 24 einen, von einer Kreisform abweichenden Querschnitt aufweisen, während die jeweils anderen Befestigungsabschnitte sowohl im ersten als auch im zweiten Zustand der Achslenker-Knoteneinheit 2 kreisförmig verbleiben.

In Fig. 5 ist eine bevorzugte Ausführungsform der erfindungsgemäßen Achslenker-Knoteneinheit 2 gezeigt, bei welcher anstelle eines dem ersten Befestigungsabschnitt 24a gegenüberliegenden Befestigungsabschnitts ein Achsstummelelement 32 integral mit der Achslenker-Knoteneinheit 2 ausgebildet ist. In dieser Ausführungsform umfasst mit anderen Worten der Basisabschnitt 22 einen als Achsstummel der Fahrzeugachse eines Nutzfahrzeuges ausgebildeten Bereich. Der erste Befestigungsabschnitt 24a weist dabei eine bevorzugt lavaldüsenartig ausgeprägte Geometrie auf, welche zur Festlegung eines Stützelements mittels eines Reibschweißverfahrens oder eines formschlüssig mit dem ersten Befestigungsabschnitt 24a verbundenen Stützelements ausgelegt ist. Weiterhin bevorzugt weisen der dritte und der vierte Befestigungsabschnitt 24c und 24d eine identische Querschnittsgestaltung auf, so dass beispielsweise ein Lenkerelement vollständig durch die Achslenker-Knoteneinheit 2 hindurch schiebbar ist und anschließend mittels eines Innenhochdruck-Umformverfahrens, bevorzugt unterstützt durch eine Klebeverbindung bzw. eine Lötverbindung sowohl an den Befestigungsabschnitten 24c und 24d als auch an den Innenflächen des Basisabschnitts 22 festlegbar ist.

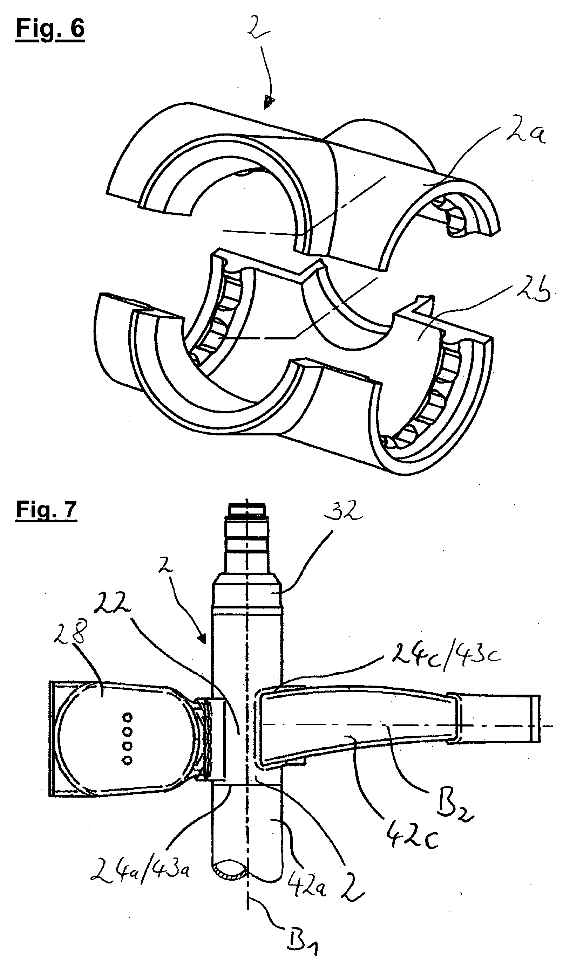

Fig. 6 zeigt eine besonders bevorzugte Ausführungsform, bei welcher die Achslenker-Knoteneinheit 2 aus zwei Halbschalen 2a und 2b gebildet ist. Die Herstellung der Achslenker-Knoteneinheit 2 aus zwei Halbschalen 2a und 2b hat den Vorteil, dass besonders kostengünstige und zeitsparende Herstellungsverfahren eingesetzt werden können. So ist es bevorzugt, dass die jeweiligen Halbschalen 2a, 2b mittels Gesenkschmieden oder eines Tiefziehverfahrens hergestellt werden und anschließend zu einer Achslenker-Knoteneinheit 2 verschweißt werden bzw. geklebt werden. Die Teilungsfläche der Achslenker-Knoteneinheit in die jeweiligen Halbschalen wird dabei bevorzugt derart ausgelegt, dass eine günstige Herstellung durch Vermeidung von Hinterschneidungen möglich ist.

Fig. 7 zeigt eine Draufsicht einer Ausführungsform einer Achslenker-Knoteneinheit 2, welche in ihrem zweiten Zustand in ein Achssystem eines Nutzfahrzeuges integriert ist. Dabei ist bevorzugt anstelle des zweiten Befestigungsabschnittes ein Achsstummelelement 32 integral mit dem Basisabschnitt 22 der AchslenkerKnoteneinheit 2 ausgeführt und anstelle des vierten Befestigungsabschnitts ein Luftfederhalter bzw. ein erster Stützabschnitt 28 integral mit dem Basisabschnitt 22 der Achslenker-Knoteneinheit 2 ausgeführt. Der in der Figur unten gezeigte Achskörper 42a ist bevorzugt mittels eines stirnseitigen Rotationsreibschweißens mit seinem Befestigungsbereich 43a an der Achslenker-Knoteneinheit 2 bzw. am ersten Befestigungsabschnitt 24a der Achslenker-Knoteneinheit 2 festgelegt. Der in der Figur rechts gezeigte Abschnitt eines Lenkerelements 42c ist bevorzugt mittels eines Innenhochdruck-Umformverfahrens mit seinem Befestigungsbereich 43c formschlüssig an der Achslenker-Knoteneinheit 2 bzw. am dritten Befestigungsabschnitt 24c der Achslenker-Knoteneinheit 2 festgelegt. Diese Ausführungsform vereint beispielhaft die bevorzugten Ausführungsformen für die verschiedenen, an der Achslenker-Knoteneinheit vorgesehenen Bauteile. Es versteht sich, dass die jeweiligen Verfahren Reibschweißen, Umformen bzw. Innenhochdruck-Umformen, oder ein integrales Ausbilden den Bauteile mit der Achslenker-Knoteneinheit auch an jeweils anderen als den hier gezeigten Befestigungsabschnitten 24a-d und bevorzugt weiterer Befestigungsabschnitte 24, angewandt werden können.

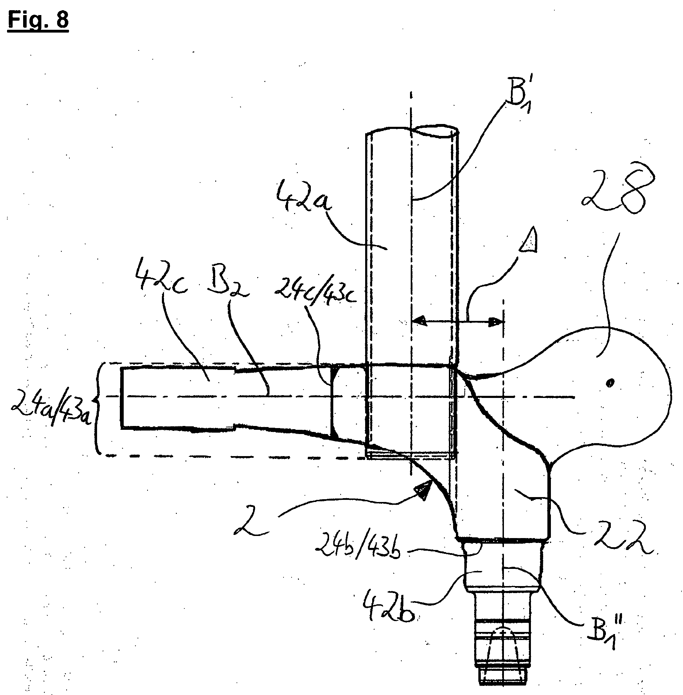

Fig. 8 zeigt eine Draufsicht einer weiteren Ausführungsform einer AchslenkerKnoteneinheit 2, welche in ihrem zweiten Zustand in ein Achssystem eines Nutzfahrzeuges integriert ist. Dabei ist bevorzugt anstelle der ersten Befestigungsachse eine erste parallele Achse B₁' vorgesehen, entlang derer sich der erste Befestigungsabschnitt 24a erstreckt und entlang derer das erste Stützelement 42a in seinem ersten Befestigungsbereich 43a an der Achslenker-Knoteneinheit 2 festgelegt ist. Das erste Stützelement 42a ist vorzugsweise das Achsrohr eines Nutzfahrzeuges. Der zweite Befestigungsabschnitt 24b ist vorzugsweise derart angeordnet, dass ein zweites Stützelement 42b an der Achslenker-Knoteneinheit 2 entlang einer zweiten, parallelen Achse B₁" in seinem zweiten Befestigungsbereich 43b festlegbar ist. Das zweite Stützelement 42b ist vorzugsweise der Achsstummel einer Radaufhängung eines Nutzfahrzeugfahrwerkes. Besonders bevorzugt ist die erste parallele Achse B₁' parallel zur zweiten, parallelen Achse B₁" ausgerichtet. Besonders bevorzugt ist die erste parallele Achse B₁' um einen Abstand Δ von der zweiten, parallelen Achse B₁" versetzt angeordnet. Dabei beträgt der Abstand Δ vorzugsweise ein 0,2- 1,3-faches, besonders bevorzugt ein 0,3- bis 0,9-faches des Durchmessers des Achsrohres. Durch die bevorzugte Beabstandung der ersten parallelen Achse B₁' von der zweiten, parallelen Achse B₁" ist eine besonders gute Anpassung der Achslenker-Knoteneinheit 2 an verschiedene Nutzfahrzeugtypen möglich, wodurch die Achslenker-Knoteneinheit 2 vielfältiger einsetzbar wird, als herkömmliche Achssysteme. Ein drittes Stützelement 42c ist vorzugsweise entlang einer zweiten Befestigungsachse B₂ an einem dritten Befestigungsabschnitt 24c an der Achslenker-Knoteneinheit festgelegt. Anstelle des vierten Befestigungsabschnitts ist besonders bevorzugt ein Luftfederhalter bzw. ein erster Stützabschnitt 28 integral mit dem Basisabschnitt 22 der Achslenker-Knoteneinheit 2 ausgeführt. Das in der Figur unten gezeigte zweite Stützelement 42b ist bevorzugt mittels eines stirnseitigen Rotationsreibschweißens mit seinem Befestigungsbereich 43b an der Achslenker-Knoteneinheit 2 bzw. am zweiten Befestigungsabschnitt 24b der Achslenker-Knoteneinheit 2 festgelegt. Der in der Figur oben gezeigte Achskörper 42a ist bevorzugt mittels eines Innenhochdruck-Umformverfahrens mit seinem Befestigungsbereich 43a an der Achslenker-Knoteneinheit 2 bzw. am ersten Befestigungsabschnitt 24a der Achslenker-Knoteneinheit 2 festgelegt. Dank der Möglichkeit, das Befestigungsverfahren für die einzelnen Stützelemente 24a, 24b, 24c an der Achslenker-Knoteneinheit 2 je nach Belastung als Klebverfahren, Reibschweißverfahren und/oder Innenhochdruck-Umformverfahren auszuwählen, ist eine besonders gute Anpassung der Achslenker-Knoteneinheit und des mit ihr hergestellten Achssystems an die zu übertragenden Kräfte und Momente realisierbar.

### Bezugszeichenliste:

- 2: - Achslenker-Knoteneinheit
- 2(a, b): - Halbschale
- 22: - Basisabschnitt
- 24(a..d): - Befestigungsabschnitt
- 28: - erster Stützbereich
- 29(a..d): - Vorsprung
- 30: - zweiter Stützbereich
- 32: - Achsstummelelement
- 42a: - erstes Stützelement, bzw. Achskörper
- 42b: - zweites Stützelement, bzw. Achsstummel
- 42c: - Stützelement, bzw. Lenkerelement
- 43(a, c): - Befestigungsbereich
- 242(a..d): - Anschlagfläche außen
- 244(a..d): - Anschlagfläche innen
- B_{1..3}: - Befestigungsachse
- B₁': - erste, parallele Achse
- B₁": - zweite, parallele Achse
- α: - Winkel
- Δ: - Abstand

## Patentansprüche

1. Achslenker-Knoteneinheit (2) zum Einsatz in Nutzfahrzeugen, umfassend einen Basisabschnitt (22) und einen Befestigungsabschnitt (24),
wobei der Basisabschnitt (22) zumindest bereichsweise hohlkörperförmig ausgebildet ist und entlang einer Befestigungsachse in den Befestigungsabschnitt (24) übergeht,
wobei der Befestigungsabschnitt (24) ausgelegt ist ein, als Achselement bzw. Lenkerelement ausgebildetes Stützelement (42) unlösbar an der Achslenker-Knoteneinheit (2) festzulegen, und
wobei ein zweiter Befestigungsabschnitt (24b) koaxial zum ersten Befestigungsabschnitt (24a) und diesem gegenüberliegend angeordnet ist, **dadurch gekennzeichnet, dass** die Achslenker-Knoteneinheit einen dritten und einen vierten Befestigungsabschnitt aufweist,
wobei der dritte Befestigungsabschnitt (24c) sich im Wesentlichen längs einer zweiten Befestigungsachse (B₂) erstreckt und der vierte Befestigungsabschnitt (24d) sich im Wesentlichen längs einer dritten Befestigungsachse (B₃) erstreckt.

2. Achslenker-Knoteneinheit (2) nach Anspruch 1,
wobei der Befestigungsabschnitt (24) eine nach außen gewandte Anschlagfläche (242) aufweist, welche bevorzugt zur Anlage des Stützelements (42) dient.

3. Achslenker-Knoteneinheit (2) nach Anspruch 2,
wobei der Befestigungsabschnitt (24) eine Vielzahl von nach außen gewandten Anschlagsflächen (242) aufweist,
wobei diese bevorzugt entlang der Befestigungsachse (B) versetzt zueinander angeordnet sind.

4. Achslenker-Knoteneinheit (2) nach einem der Ansprüche 2 oder 3,
wobei in einem ersten Zustand der Achslenker-Knoteneinheit (2) die nach außen gewandte Anschlagfläche (242) rotationssymmetrisch um die Befestigungsachse (B) ausgebildet ist.

5. Achslenker-Knoteneinheit (2) nach einem der vorhergehenden Ansprüche,
wobei der Befestigungsabschnitt (24) eine nach innen gewandte Anschlagfläche (244) aufweist, welche in einem zweiten Zustand des Stützelements (42) zur Anlage des Stützelements (42) dient.

6. Achslenker-Knoteneinheit (2) nach einem der vorhergehenden Ansprüche,
wobei der Befestigungsabschnitt (24) einen Vorsprung (29) und/oder einen Rücksprung quer zur Befestigungsachse aufweist, um das Stützelement (42) formschlüssig an der Achslenker-Knoteneinheit (2) festzulegen.

7. Achslenker-Knoteneinheit (2) nach einem der vorhergehenden Ansprüche, aufweisend einen ersten Stützabschnitt (28),
wobei der erste Stützabschnitt (28) in einem ersten und/oder zweiten Zustand der Achslenker-Knoteneinheit (2) bevorzugt als Befestigungsbereich für eine Luftfeder eines Nutzfahrzeuges ausgebildet ist.

8. Achslenker-Knoteneinheit (2) nach einem der vorhergehenden Ansprüche,
wobei die Achslenker-Knoteneinheit (2) aus zwei Halbschalen (2a, 2b) gebildet ist.

9. Achslenker-Knoteneinheit (2) nach einem der vorhergehenden Ansprüche, wobei der zweite Befestigungsabschnitt (24b) sich entlang einer ersten Befestigungsachse (B₁) erstreckt,
wobei der erste und der zweite Befestigungsabschnitt (24a, 24b) vorzugsweise ausgelegt sind, ein Achsrohr und einen Achsstummel eines Nutzfahrzeugs festzulegen.

10. Achslenker-Knoteneinheit (2) nach Anspruch 9,
wobei die erste Befestigungsachse (B₁) vorzugsweise senkrecht zu der zweiten und der dritten Befestigungsachse (B₂, B₃) steht, und
wobei der dritte und der vierte Befestigungsabschnitt (24c, 24d) vorzugsweise ausgelegt sind, Elemente eines Längslenkers festzulegen.

11. Achslenker-Knoteneinheit (2) nach Anspruch 10,
wobei die zweite Befestigungsachse (B₂) und die dritte Befestigungsachse (B₃) einen Winkel (α) einschließen, welcher zwischen 90° und 270°, bevorzugt zwischen 135° und 225° und besonders bevorzugt bei ca. 160° bis 220° liegt.

12. Achslenker-Knoteneinheit (2) nach einem der Ansprüche 10 oder 11,
wobei der erste Befestigungsabschnitt (24a) eine Erstreckung quer zur ersten Befestigungsachse (B₁) aufweist, die zur Erstreckung des dritten Befestigungsabschnittes (24c) quer zur zweiten Befestigungsachse (B₂) in einem Verhältnis von 0,7 bis 1,5, bevorzugt von 0,9 bis 1,4 und besonders bevorzugt von ca. 1,1 bis 1,3 liegt.

13. Achslenker-Knoteneinheit (2) nach einem der Ansprüche 10 bis 12,
wobei der zweite Befestigungsabschnitt (24b) eine Erstreckung quer zur ersten Befestigungsachse (B₁) aufweist, die zur Erstreckung des ersten Befestigungsabschnitts (24a) quer zur ersten Befestigungsachse (B₁) in einem Verhältnis von 0,7 bis 1,5, bevorzugt 0,9 bis 1,4 und besonders bevorzugt von ca. 1,1 bis 1,3 liegt.

14. Achslenker-Knoteneinheit (2) nach einem der vorhergehenden Ansprüche,
wobei der Befestigungsabschnitt (24) und der Basisabschnitt (22) in einem zweiten Zustand der Achslenker-Knoteneinheit (2) einen polygonalen, vorzugsweise rechteckigen Querschnitt aufweisen.

## Claims

1. Axle link junction unit (2) for use in utility vehicles, comprising a base section (22) and an attachment section (24),
wherein the base section (22) is in the form of a hollow body at least in regions and transitions into the attachment section (24) along an attachment axis,
wherein the attachment section (24) is designed for non-detachably fixing a support element (42), in the form of an axle element or link element, to the axle link junction unit (2), and
wherein a second attachment section (24b) is arranged coaxially with respect to the first attachment section (24a) and so as to be situated opposite said first attachment section,
**characterized in that** the axle link junction unit has a third and a fourth attachment section, wherein the third attachment section (24c) extends substantially along a second attachment axis (B₂) and the fourth attachment section (24d) extends substantially along a third attachment axis (B₃).

2. Axle link junction unit (2) according to Claim 1,
wherein the attachment section (24) has an outwardly facing abutment surface (242) which preferably serves for the abutment of the support element (42).

3. Axle link junction unit (2) according to Claim 2,
wherein the attachment section (24) has a multiplicity of outwardly facing abutment surfaces (242),
wherein said abutment surfaces are preferably arranged offset with respect to one another along the attachment axis (B).

4. Axle link junction unit (2) according to either of Claims 2 and 3,
wherein, in a first state of the axle link junction unit (2), the outwardly facing abutment surface (242) is of rotationally symmetrical form about the attachment axis (B).

5. Axle link junction unit (2) according to one of the preceding claims,
wherein the attachment section (24) has an inwardly facing abutment surface (244) which, in a second state of the support element (42), serves for the abutment of the support element (42).

6. Axle link junction unit (2) according to one of the preceding claims,
wherein the attachment section (24) has a projection (29) and/or a recess transversely with respect to the attachment axis in order to fix the support element (42) in positively locking fashion to the axle link junction unit (2).

7. Axle link junction unit (2) according to one of the preceding claims,
having a first support section (28),
wherein, in a first and/or second state of the axle link junction unit (2), the first support section (28) is preferably in the form of an attachment region for a pneumatic spring of a utility vehicle.

8. Axle link junction unit (2) according to one of the preceding claims,
wherein the axle link junction unit (2) is formed from two half-shells (2a, 2b).

9. Axle link junction unit (2) according to one of the preceding claims,
wherein the second attachment section (24b) extends along a first attachment axis (B₁),
wherein the first and second attachment sections (24a, 24b) are preferably designed for the fixing of an axle tube and an axle stub of a utility vehicle.

10. Axle link junction unit (2) according to Claim 9,
wherein the first attachment axis (B₁) is preferably perpendicular to the second and third attachment axes (B₂, B₃), and
wherein the third and fourth attachment sections (24c, 24d) are preferably designed for the fixing of elements of a longitudinal link.

11. Axle link junction unit (2) according to Claim 10,
wherein the second attachment axis (B₂) and the third attachment axis (B₃) enclose an angle (α) which lies between 90° and 270°, preferably between 135° and 225°, and which is particularly preferably approximately 160° to 220°.

12. Axle link junction unit (2) according to either of Claims 10 and 11,
wherein the first attachment section (24a) has an extent perpendicular to the first attachment axis (B₁) which is in a ratio from 0.7 to 1.5, preferably from 0.9 to 1.4, and particularly preferably of approximately 1.1 to 1.3, with respect to the extent of the third attachment section (24c) perpendicular to the second attachment axis (B₂).

13. Axle link junction unit (2) according to one of Claims 10 to 12,
wherein the second attachment section (24b) has an extent perpendicular to the first attachment axis (B₁) which is in a ratio from 0.7 to 1.5, preferably from 0.9 to 1.4, and particularly preferably of approximately 1.1 to 1.3, with respect to the extent of the first attachment section (24a) perpendicular to the first attachment axis (B₁).

14. Axle link junction unit (2) according to one of the preceding claims,
wherein, in a second state of the axle link junction unit (2), the attachment section (24) and the base section (22) have a polygonal, preferably rectangular cross section.

## Revendications

1. Unité d'articulation pour bras d'essieu (2) pour l'utilisation dans des véhicules automobiles, incluant un tronçon de base (22) et un tronçon de fixation (24),
dans laquelle le tronçon de base (22) est réalisé au moins localement en forme de corps creux et se transforme dans le tronçon de fixation (24) le long d'un axe de fixation,
dans laquelle le tronçon de fixation (24) est conçu pour immobiliser un élément de soutien (42), réalisé sous forme d'élément d'essieu ou d'élément de bras, sur l'unité d'articulation pour bras d'essieu (2), et dans laquelle un second tronçon de fixation (24b) est agencé coaxialement au premier tronçon de fixation (24a) et à l'opposé de celui-ci,
**caractérisée en ce que** l'unité d'articulation pour bras d'essieu comprend un troisième et un quatrième tronçon de fixation,
dans laquelle le troisième tronçon de fixation (24c) s'étend sensiblement le long d'un second axe de fixation (B2) et le quatrième tronçon de fixation (24d) s'étend sensiblement le long d'un troisième axe de fixation (B3).

2. Unité d'articulation pour bras d'essieu (2) selon la revendication 1,
dans laquelle le tronçon de fixation (24) comporte une surface de butée (242) tournée vers l'extérieur, qui sert de préférence pour l'appui de l'élément de soutien (42).

3. Unité d'articulation pour bras d'essieu (2) selon la revendication 2, dans laquelle le tronçon de fixation (24) comporte une pluralité de surfaces de butée (242) tournées vers l'extérieur,
dans laquelle celles-ci sont de préférence agencées le long de l'axe de fixation (B) en décalage les unes par rapport aux autres.

4. Unité d'articulation pour bras d'essieu (2) selon l'une des revendications 2 ou 3,
dans laquelle, dans une première situation de l'unité d'articulation pour bras d'essieu (2), la surface de butée (242) tournée vers l'extérieur est réalisée à symétrie de révolution autour de l'axe de fixation (B).

5. Unité d'articulation pour bras d'essieu (2) selon l'une des revendications précédentes,
dans laquelle le tronçon de fixation (24) comporte une surface de butée (244) tournée vers l'intérieur, qui sert, dans une seconde situation de l'élément de soutien (42), à l'appui de l'élément de soutien (42).

6. Unité d'articulation pour bras d'essieu (2) selon l'une des revendications précédentes,
dans laquelle le tronçon de fixation (24) comporte une saillie (29) et/ou un ressaut transversalement à l'axe de fixation, afin d'immobiliser l'élément de soutien (42) par coopération de formes sur l'unité d'articulation pour bras d'essieu (2).

7. Unité d'articulation pour bras d'essieu (2) selon l'une des revendications précédentes, comprenant un premier tronçon de soutien (28),
dans laquelle le premier tronçon de soutien (28) est réalisé, dans une première et/ou une seconde situation de l'unité d'articulation pour bras d'essieu (2), à titre de zone de fixation pour un ressort pneumatique d'un véhicule utilitaire.

8. Unité d'articulation pour bras d'essieu (2) selon l'une des revendications précédentes,
dans laquelle l'unité d'articulation pour bras d'essieu (2) est réalisée à partir de deux demi-coques (2a, 2b).

9. Unité d'articulation pour bras d'essieu (2) selon l'une des revendications précédentes,
dans laquelle le second tronçon de fixation (24b) s'étend le long d'un premier axe de fixation (B1),
dans laquelle le premier et le second tronçon de fixation (24a, 24b) sont conçus de préférence pour immobiliser un tube d'essieu et un moignon d'essieu d'un automobile utilitaire.

10. Unité d'articulation pour bras d'essieu (2) selon la revendication 9,
dans laquelle le premier axe de fixation (B1) est de préférence perpendiculaire au second et au troisième axe de fixation (B2, B3), et dans laquelle le troisième et le quatrième tronçon de fixation (24c, 24d) sont de préférence conçus pour immobiliser des éléments d'un bras longitudinal.

11. Unité d'articulation pour bras d'essieu (2) selon la revendication 10,
dans laquelle le second axe de fixation (B2) et le troisième axe de fixation (B3) définissent un angle (α) qui est compris entre 90° et 270°, de préférence entre 135° et 225°, et de manière particulièrement préférée environ 160° à 220°.

12. Unité d'articulation pour bras d'essieu (2) selon l'une des revendications 10 ou 11,
dans laquelle le premier tronçon de fixation (24a) présente une extension transversalement au premier axe de fixation (B1), qui est dans un rapport de 0,7 à 1,5, de préférence de 0,9 à 1,4, et de manière particulièrement préférée environ 1,1 à 1,3 par rapport à l'extension du troisième tronçon de fixation (24c) transversalement au second axe de fixation (B2).

13. Unité d'articulation pour bras d'essieu (2) selon l'une des revendications 10 à 12,
dans laquelle le troisième tronçon de fixation (24b) présente une extension transversalement au premier axe de fixation (B1), qui est dans un rapport de 0,7 à 1,5, de préférence de 0,9 à 1,4 et de manière particulièrement préférée environ 1,1 à 1,3 par rapport à l'extension du premier tronçon de fixation (24a) transversalement au premier axe de fixation (B1).

14. Unité d'articulation pour bras d'essieu (2) selon l'une des revendications précédentes,
dans laquelle le tronçon de fixation (24) et le tronçon de base (22) présentent, dans une seconde situation de l'unité d'articulation pour bras d'essieu (2), une section transversale polygonale, de préférence rectangulaire.
